# EUROPÄISCHE PATENTSCHRIFT

(11) **EP 4 019 117 B1**
(45) Veröffentlichungstag und Bekanntmachung des Hinweises auf die Patenterteilung: **25.11.2026**
(21) Anmeldenummer: 21215038.7
(22) Anmeldetag: 16.12.2021
(51) Int. Cl.: B01D 61/12, B01D 61/02, B01J 8/00

(54) **VERBESSERTE VARIABLE UND SELBSTREGULIERENDE PERMEATRÜCKFÜHRUNG IN DER ORGANOPHILEN NANOFILTRATION**
IMPROVED VARIABLE AND SELF-REGULATING PERMEATE RECOVERY IN ORGANOPHILIC NANOFILTRATION
RÉCUPÉRATION AMÉLIORÉE VARIABLE ET AUTO-RÉGULANT DU PERMÉAT DANS LA NANOFILTRATION ORGANOPHILE

(30) Priorität: 22.12.2020 EP 20216295
(43) Veröffentlichungstag der Anmeldung: 29.06.2022
(73) Patentinhaber: Evonik Oxeno GmbH & Co. KG, 45772 Marl (DE)
(72) Erfinder: Gluth, Frederik, 45472 Mülheim an der Ruhr (DE); Schäpertöns, Marc, 45657 Recklinghausen (DE); Quell, Thomas, 2030 Antwerpen (BE); Geilen, Frank, 45721 Haltern am See (DE); Drees, Stefan, 48249 Dülmen (DE); Höckelmann, Fabian, 45770 Marl (DE); Franke, Robert, 45772 Marl (DE)
(74) Vertreter: Evonik Patent Association

(56) Entgegenhaltungen:
- EP-A1- 2 588 217
- EP-A1- 3 059 005
- EP-B1- 2 588 217
- DE-A1- 102004 007 548
- DE-U1- 202019 001 414
- FR-A1- 3 074 490

## Beschreibung

Die vorliegende Erfindung betrifft eine regel- und prozesstechnische Verbesserung für ein Verfahren zur kontinuierlichen Abtrennung einer Komponente aus einem flüssigen Gemisch unter Verwendung einer Membraneinheit, die mindestens eine Membranstufe umfasst. Die Verbesserung besteht darin, dass ein Teil des Gesamtpermeatstroms zum Feedbehälter und/oder hinter den Feedbehälter aber vor die Fördereinrichtung zurückgeführt und der restliche Teil des Gesamtpermeatstroms abgeführt wird, wobei das zurückgeführte Permeat eine höhere Konzentration der abzutrennenden Komponente aufweist als das abgeführte Permeat. Das vorliegend beschriebene Verfahren kann insbesondere zur Abtrennung eines homogen gelösten Katalysators aus einem flüssigen Reaktionsgemisch verwendet werden.

Membrantrennverfahren, zum Beispiel für die Abtrennung von homogen gelösten Katalysatoren aus einem Reaktionsgemisch, sind im Stand der Technik grundsätzlich bekannt. Hierzu sei exemplarisch auf die WO 2014/131623 A1 verwiesen.

Für Membrantrennverfahren dieser Art sind auch bereits regeltechnische Verbesserungen beschrieben worden. In der internationalen Anmeldung WO 2014/183952 A1 wird beispielsweise ein Membrantrennverfahren zur Abtrennung eines homogen gelösten Katalysators aus einem Reaktionsgemisch offenbart, bei dem regelungstechnisch zwei Größen, der Retentatvolumenstrom der Membrantrenneinheit und der Rückhalt der Membrantrenneinheit, konstant gehalten werden, um schwankende Betriebsbedingungen, insbesondere Schwankungen im Volumenstrom des aus der Reaktionszone stammenden Reaktionsgemisches, auszugleichen.

Um die vorgenannten Regelgrößen konstant zu halten, schlägt die WO 2014/183952 A1 einen Fließwiderstand zur Einstellung bzw. zur Konstanthaltung des Retentatvolumenstroms und eine Regelung der Temperatur und/oder des Drucks im Überströmkreislaufes zur Einstellung bzw. zur Konstanthaltung des Rückhalts vor.

Ein Problem des dort vorgeschlagenen Verfahrens ist, dass eine Konstanthaltung des Rückhalts der Membrantrenneinheit nicht für alle Verfahren zielführend ist, sondern - unter Berücksichtigung des Anlagendurchsatzes und der bereits installierten Membranfläche der Membrantrenneinheit - vielmehr eine Optimierung, häufig eine Maximierung, des Rückhaltes der Membrantrenneinheit während des Verfahrens angestrebt werden sollte. Eine wie in der WO 2014/183952 A1 beschriebene Regelung mittels eines Fließwiderstandes kann gegebenenfalls dazu führen, dass die bereits installierte Membranfläche nicht beim optimalen Transmembrandruck, sondern unterhalb dessen betrieben wird. Das dort beschriebene Verfahren kann weiterhin dazu führen, dass bei gegebenem Gesamtdurchsatz der Anlage und dem sich daraus ergebenden abgeführten Permeatstrom (Teil des Permeatstroms, der permeatseitig aus der Membranstufe bzw. der Membrantrenneinheit herausgeführt wird), der Gesamtpermeatstrom und der sich daraus anhand einer einfachen Massenbilanz unter Berücksichtigung des abgeführten Permeatstroms ergebende zurückgeführte Permeatstrom (Teil des Gesamtpermeatstroms, der in die Membrantrenneinheit rezykliert wird) kleiner ausfällt als dies möglich und/oder wünschenswert wäre.

Ein weiterer Nachteil des in der WO 2014/183952 A1 beschriebenen Verfahrens ist, dass es sowohl einen Behälter für das Permeat, als auch eine Pumpe vorsieht, um ein permeatseitig konstantes Regelungssystem zu erhalten. Mit der Bereitstellung einer Pumpe, die Permeat aus dem Permeatbehälter in den Überströmkreislauf oder den Feedbehälter pumpt, sind jedoch ein erhöhtes Anlageninventar und Kosten verbunden, beispielsweise für die Anschaffung oder für den Betrieb, die Instandhaltung und die Reparatur, die darüber hinaus auch einen Anlagenausfall und damit einen Produktionsausfall zu Folge haben können.

Der Einbau eines Behälters führt darüber hinaus im Regelfall dazu, dass der permeatseitige Teil der Membrantrennstufe nicht hydraulisch gefüllt ist, was insbesondere bei Verwendung toxischer Fluide gegebenenfalls zu erhöhten Sicherheitsrisiken führen kann. Zudem entsteht durch einen Behälter auf Permeatseite zusätzlich zum Feedbehälter die Möglichkeit, dass die Regelung der beiden Behälterstände zu gegenseiteigen Schwankungen führen kann.

In der DE 20 2019 001 414 U1 wird eine Membrantrennvorrichtung zum Trennen eines Gaststroms beschrieben. Die Vorrichtung umfasst mindestens 3 Membranmodule, aus denen die Permeate der letzten beiden Membranmodule kombiniert werden. Das Permeat des ersten Moduls wird ausgeschleust.

In der WO 2012/000727 A1 offenbart eine Vorrichtung mit einer Verschaltung von mehreren Gasseparationsmembranmodulen, die bei der Auftrennung von Gasgemischen in zwei Fraktionen eingesetzt werden können. In einer Ausführungsform sind 3 Membranmodule miteinander verschaltet, wobei alle drei Permeate unterschiedlich weitergeleitet werden.

In der DE 10 2004 007 548 A1 wird ein Verfahren zur Auftrennung eines Gemisches durch die Verwendung von mindestens zwei hintereinandergeschalteten Membranstufen. In einer Ausführungsform sind 3 Membranmodule vorhanden, wobei das Permeat aus dem zweiten Membranmodul zum dritten Membranmodul geführt und das dort anfallende Retentat wird zurückgeführt.

In der FR 3 074 490 A1 wird eine Vorrichtung zur Entmineralisierung von Brackwasser oder Meerwasser offenbart. Die Vorrichtung kann mehrere Membranmodule umfassen.

Die Aufgabe der vorliegenden Erfindung war deshalb die Bereitstellung eines kostengünstigeren Verfahrens zur kontinuierlichen Abtrennung einer Komponente aus einem Gemisch, vorzugsweise zur kontinuierlichen Abtrennung eines homogenen Katalysators aus einem Reaktionsgemisch. Weiterhin war es die Aufgabe der vorliegenden Erfindung eine selbstregulierende Permeatrückführung bei dem Verfahren zur kontinuierlichen Abtrennung einer Komponente aus einem Gemisch, vorzugsweise zur kontinuierlichen Abtrennung eines homogenen Katalysators aus einem Reaktionsgemisch, bereitzustellen, bei dem die installierte Membranfläche bei unterschiedlichen Lastzuständen optimal ausgenutzt werden kann, zum Beispiel zur Maximierung der Ausbeute.

Die zugrundeliegende Aufgabe konnte durch das Verfahren gemäß Anspruch 1 gelöst werden. Bevorzugte Ausgestaltungen und Ausführungsformen sind in den Unteransprüchen angegeben.

Das erfindungsgemäße Verfahren ist ein Verfahren zur kontinuierlichen Abtrennung einer Komponente aus einem flüssigen Gemisch unter Verwendung einer Membraneinheit, die mindestens eine Membranstufe umfasst und mit dem Gemisch als Feed gespeist wird, wobei eine Membranstufe zumindest aus einer Fördereinrichtung, mindestens zwei seriell verschalteten Membranmodulen und einem der Fördereinrichtung vorgeschalteten Feedbehälter besteht, wobei das Verfahren die folgenden Schritte umfasst, bei denen
das Gemisch aus dem Feedbehälter mittels der Fördereinrichtung als Feed zum ersten der mindestens zwei Membranmodule geführt wird, wodurch die abzutrennende Komponente, jeweils bezogen auf das zum ersten Membranmodul geführte Gemisch, im resultierenden Permeatstrom des ersten Membranmoduls abgereichert und im resultierenden Retentatstrom des ersten Membranmoduls angereichert wird,
das Retentat des ersten Membranmoduls zum zweiten Membranmodul geführt wird, wodurch die abzutrennende Komponente, jeweils bezogen auf das Retentat des ersten Membranmoduls, im resultierenden Permeatstrom des zweiten Membranmoduls abgereichert und im resultierenden Retentatstrom des zweiten Membranmoduls angereichert wird, dadurch gekennzeichnet, dass
die mindestens zwei Membranmodule permeatseitig darüber miteinander verknüpft sind, dass die mindestens zwei Permeatströme jeweils zu einer gemeinsamen Rohrleitung geführt werden, wodurch in der Rohrleitung ein Gesamtpermeatstrom entsteht, und
dass die mindestens zwei Membranmodule permeatseitig gegenläufig so an die gemeinsame Rohrleitung angeschlossen sind, dass der Teil des Gesamtpermeatstroms, das zurückgeführte Permeat, zumindest teilweise zum Feedbehälter und/oder hinter den Feedbehälter aber vor die Fördereinrichtung zurückgeführt wird, während der restliche Teil des Gesamtpermeatstroms, das abgeführte Permeat, zumindest teilweise aus der Membranstufe herausgeführt wird, wobei das zurückgeführte Permeat eine höhere Konzentration der abzutrennenden Komponente aufweist als das abgeführte Permeat.

Der Begriff abzutrennende Komponente meint im Rahmen der vorliegenden Erfindung die Komponente, welche anteilig und/oder nach der Permeabilität gewollt weniger stark durch die Membran permeiert, also die Komponente, die durch die Membran zurückgehalten wird. Die abzutrennende Komponente weist für die jeweils betrachteten Membranmodule somit einen positiven Rückhalt auf. Die abzutrennende Komponente kann zudem eine einzelne spezifische chemische Substanz sein aber auch eine Gruppe chemischer Substanzen, die prozesstechnisch in einem gemeinsamen Kontext betrachtet werden.

Das erfindungsgemäß Verfahren kann auch mehr als zwei Membranmodule umfassen. Liegen drei oder mehr Membranmodule vor, ist es bevorzugt, dass das Retentat des vorherigen Membranmoduls zum nachfolgenden Membranmodul (gilt nicht für das letzte Membanmodul) geführt wird, wodurch die abzutrennende Komponente, jeweils bezogen auf das Retentat des vorherigen Membranmoduls, im resultierenden Permeatstrom des nachfolgenden Membranmoduls abgereichert und im resultierenden Retentatstrom des nachfolgenden Membranmoduls angereichert wird.

Membraneinheit im Sinne der vorliegenden Erfindung betrifft die gesamte Membrantrenneinheit, zur der das flüssige Gemisch, welches die abzutrennende Komponente enthält, geleitet wird. Eine Membraneinheit besteht aus mindestens einer Membranstufe. Nachgeschaltete Weiterverarbeitungs- oder Aufreinigungsschritte, sowie eine eventuelle Lagerung des abgeführten Permeats in einem Behälter sind deshalb definitionsgemäß nicht der Teil der Membraneinheit.

Der Begriff Membranstufe meint zumindest einen Teil der Membraneinheit und umfasst mindestens eine Fördereinrichtung, beispielsweise eine Pumpe, und mindestens zwei Membranmodule. Für den Fall, dass nur eine einzige Membranstufe vorliegt, sind die Begriffe Membraneinheit und Membranstufe synonym zu verstehen. Die Membranstufe weist einen der Fördereinrichtung vorgeschalteten Feedbehälter auf, in den das flüssige Gemisch, beispielsweise der Austrag aus einer homogen katalysierten Reaktion, eingefüllt wird und von dem es zu dem einen oder den mehreren Membranelementen geführt wird. Das zurückgeführte Permeat kann ebenfalls in den Feedbehälter geleitet werden. Zusätzlich oder alternativ ist es möglich, dass das zurückgeführte Permeat nicht in den Feedbehälter, sondern hinter den Feedbehälter aber vor die Fördereinrichtung, d. h. zu einem Punkt in der Leitung zwischen Feedbehälter und Fördereinrichtung geleitet wird.

Der zur Beschreibung der vorliegenden Erfindung benutzte Begriff Membranmodul bezieht sich auf eine anlagentechnische Untereinheit der Membranstufe. Ein Membranmodul ist demnach eine Zusammenschaltung von einem oder mehreren Membranelement(en). Membranmodule können entweder als Membranloop oder als Membranrack ausgestaltet sein. Unter Membranloop ist eine Untereinheit zu verstehen, in der mindestens ein Membranelement und mindestens eine Fördereinrichtung, durch die ein bewegter Überströmkreislauf erzeugt wird, vorhanden sind. Der Begriff Membranrack meint dagegen eine Untereinheit, die sich dadurch auszeichnet, dass mindestens ein Membranelement, jedoch keine Fördereinrichtung vorhanden ist und demnach auch kein bewegter Überströmkreislauf erzeugt wird.

Der Begriff Membranelement meint im Sinne der vorliegenden Erfindung die Membran bzw. den Aufbau oder die Vorrichtung, die die Membran enthält und wo die gewünschte Stofftrennung tatsächlich stattfindet, also die Komponente aus dem Gemisch bzw. der homogene Katalysator aus der Reaktionslösung abgetrennt wird. Dies können beispielsweise sogenannte Spiralwickelelemente sein, wie sie in vielen Anwendungen der industriellen Membrantrennung eingesetzt werden.

Die Erfindung beruht darauf, dass nur der Gesamtpermeatstrom aus der letzten Membranstufe in das zurückgeführte und das abgeführte Permeat aufgeteilt wird. Sollte nur eine Membranstufe vorliegen, so ist diese einzige Membranstufe auch die letzte Membranstufe. Sofern zwei oder mehr Membranstufen vorliegen, findet in der oder den ersten Membranstufe(n) keine Aufteilung statt, sondern der Gesamtpermeatstrom wird vollständig zur nächsten Membranstufe geführt. Die Aufteilung erfolgt dann wie vorgenannt beschrieben ausschließlich in der letzten Membranstufe. Das "Aufteilen" im Sinne der vorliegenden Erfindung bezieht sich ausschließlich auf die Menge bzw. den Massenstrom des Gesamtpermeats und meint explizit keinen zusätzlichen Trennschritt, bei dem die weitere Komponenten aus dem Gesamtpermeat entfernt werden, also beispielsweise keine Destillation, keine Extraktion, keine Kristallisation, keine Adsorption und keine weiteren Membrantrennschritte.

Ein Vorteil des erfindungsgemäßen Verfahrens ist, dass ein Teil des Gesamtpermeatstroms der letzten Membranstufe, also das zurückgeführte Permeat, nicht die Membranstufe und/oder nicht die Membraneinheit verlässt und dann erst beispielsweise über einen Permeatbehälter zurückgeführt wird, sondern innerhalb der mindestens einen Membranstufe und/oder der Membraneinheit verbleibt und von dort zum Feedbehälter und/oder hinter den Feedbehälter aber vor die Fördereinrichtung zurückgeführt wird. Dadurch wird es möglich auf eine nachgeschaltete Pumpe, die Permeat zurück in den Überströmkreislauf oder zurück in den Feedbehälter pumpt, zu verzichten, da sich die Permeatrückführung je nach Last selbst reguliert. Die Rückführung des zurückgeführten Permeats zum Feedbehälter und/oder hinter den Feedbehälter aber vor die Fördereinrichtung erfolgt also nicht mittels einer Fördereinrichtung, sondern hydraulisch, d.h. durch eine zwischen Permeatseite der Membraneinheit und Saugseite der Fördereinrichtung bzw. dem Feedbehälter bestehenden Druckdifferenz. Anders formuliert: Zwischen Permeatseite und Feedbehälter ist keine weitere Fördereinrichtung, insbesondere keine Pumpe.

Der Teil des Gesamtpermeatstroms, der aus der Membranstufe bzw. der Membraneinheit abgeführt wird, also das abgeführte Permeat, kann zu einem nachfolgenden Prozessschritt geleitet werden. Unter dem Begriff Prozessschritt kann im Sinne der vorliegenden Erfindung jeder nachfolgende Prozess verstanden werden, beispielsweise Weiterverarbeitungs- oder Aufreinigungsprozessschritte oder Kombinationen daraus. Darunter fallen insbesondere eine (weitere) Umsetzung der abgetrennten Komponente, die Aufreinigung durch bekannte Verfahren wie Destillation, Verdampfung o. ä. Möglich sind auch nachfolgende Abfüll- oder Transportprozessschritte. Vor dem nachfolgenden Prozessschritt ist auch eine vorherige Lagerung in einem geeigneten Behälter, beispielsweise in einem Permeatbehälter, möglich. Sofern ein Permeatbehälter vorliegt, erfolgt die erfindungsgemäße Aufteilung des Gesamtpermeats vor dem Permeatbehälter, sodass nur das abgeführte Permeat zum Permeatbehälter gelangt. Es versteht sich, dass auch mehrere Prozessschritte, optional über eine vorherige Lagerung, hintereinander erfolgen können, beispielsweise eine Aufreinigung, gefolgt von einer Umsetzung der aufgereinigten Komponente und eine zusätzliche Aufreinigung des Umsetzungsprodukts.

Erfindungsgemäß sind die mindestens zwei Membranmodule permeatseitig gegenläufig so an eine gemeinsame Rohrleitung angeschlossen, dass der Teil des Gesamtpermeats, welches mindestens überwiegend dem retentatseitig letzten Membranmodul entstammt (das zurückgeführte Permeat), zumindest teilweise zum Feedbehälter und/oder hinter den Feedbehälter aber vor die Fördereinrichtung zurückgeführt wird, während der restliche Teil des Gesamtpermeats, welches mindestens überwiegend dem retentatseitig ersten Membranmodul entstammt (das abgeführte Permeat), zumindest teilweise aus der Membranstufe herausgeführt wird. Das Permeat aller in einer derartigen Membranstufe vorhandenen Membranmodule wird somit zu einer gemeinsamen Rohrleitung geführt und dort aufgetrennt. In der gemeinsamen Rohrleitung befinden sich zwischen den Anschlüssen des ersten und des letzten Membranmoduls an die Rohrleitung vorzugsweise keine regelnden Aktuatoren, beispielsweise Ventile oder Trenneinheiten. Dies schließt jedoch nicht aus, dass nicht-regelnde Aktuatoren vorhanden sind, d. h. Aktuatoren, die zwar vorhanden sind, aber nicht in das Verfahren eingreifen, beispielsweise ein ständig und durchgehend geöffnetes Ventil. Durch das erfindungsgemäße Konzept wird anlagentechnisch auf einfache Weise erreicht, dass das zurückgeführte Permeat eine höhere Konzentration der abzutrennenden Komponente als das abgeführte Permeat aufweist. Diese anlagen- und regelungstechnischen Vorgaben führen dazu, dass für den ungünstigen Fall, dass es keinen Zulauf zum Feedbehälter aus einem vorgelagerten Prozessschritt gibt, eine vollständige Rückführung des Permeats aller Module zum Feedbehälter bzw. in die Membraneinheit stattfindet.

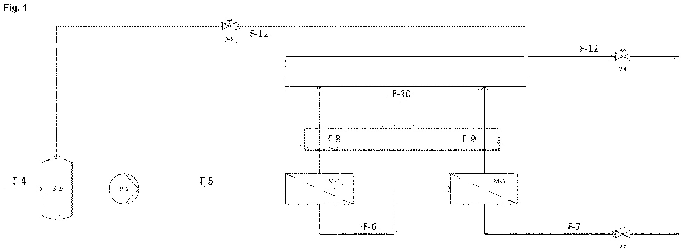

Das vorliegende Verfahren sorgt dafür, dass sich die unterschiedlichen Permeate der mindestens zwei Membranmodule nicht vollständig vermischen, d. h. ein Gemisch mit gleicher Konzentration der abzutrennenden Komponente in der gemeinsamen Rohrleitung entsteht. Es soll schließlich erreicht, werden dass das zurückgeführte Permeat eine höhere Konzentration der abzutrennenden Komponente aufweist als das abgeführte Permeat, was bei einer vollständigen Mischung nicht erreicht würde. Dies lässt sich auch anhand der Figur 1 veranschaulichen: So muss sich im Rahmen des erfindungsgemäßen Verfahrens ergeben, dass die Konzentration der abzutrennenden Komponente im zurückgeführten Permeat größer ist als im abgeführten Permeat. Bezogen auf die Konzentration der abzutrennenden Komponente gilt demnach immer: F-11 > F-12. Vorzugsweise ergibt sich zudem, dass die Konzentration im der abzutrennenden Komponente im zurückgeführten Permeat größer ist als in der gemeinsamen Rohrleitung zwischen den Anschlüssen des ersten und des letzten Membranmoduls, wobei dort die Konzentration der abzutrennenden Komponente größer ist als im abgeführten Permeat. Bezogen auf die Konzentration der abzutrennenden Komponente gilt demnach: F-11 > F-10 > F-12. Das Verhindern der vollständigen Vermischung lässt sich anlagentechnisch auf verschiedene Art realisieren. Eine gemäß der vorliegenden Erfindung bevorzugte Möglichkeit ist die Beschaffenheit der gemeinsamen Rohrleitung (z. B. die Länge, der Durchmesser, usw.), die so eingestellt wird, dass eine vollständige Mischung des Gesamtpermeats vermieden wird.

Um die abfließenden Ströme des zurückgeführten und des abgeführten Permeats zu kontrollieren, kann auf der Permeatseite mindestens ein einstellbarer Fließwiderstand vorliegen, über den der Massenstrom des Permeats geregelt wird. Ein Fließwiderstand im Sinne der vorliegenden Erfindung ist ein Aktuator, mit dem der Massenstrom eines Stroms geregelt werden kann, beispielsweise ein Ventil. Weiterhin bevorzugt ist eine Ausführungsform, bei der auf Permeatseite mindestens zwei einstellbare Fließwiderstände, vorzugsweise genau zwei einstellbare Fließwiderstände, vorliegen, womit der Massenstrom des abgeführten Permeats, sowie der der Permeatdruck insbesondere der gemeinsamen Rohrleitung eingestellt werden können. Die mindestens zwei einstellbaren Fließwiderstände sind insbesondere Ventile. Die Ventile sind vorzugsweise nicht zwischen den Anschlüssen des ersten und des letzten Membranmoduls an die Rohrleitung vorhanden, sondern befinden sich in Fließrichtung des abgeführten bzw. des zurückgeführten Permeats hinter den genannten Anschlüssen an die Rohrleitung.

Im Hinblick auf das erfindungsgemäße Membrantrennverfahren liegt eine ausgeglichene äußere Massenbilanz vor, das heißt der Massenstrom des der Membraneinheit zugeführten Feeds entspricht den Massenströmen der aus der Membraneinheit herausgeführten Permeat- und/oder Retentatströme. Dieser Umstand kann genutzt werden. In einer bevorzugten Ausführungsform der vorliegenden Erfindung wird der Massenstrom eines der drei Ströme, ausgewählt aus dem Feed zur Membraneinheit, dem abgeführten Permeat, und dem Retentat der Membraneinheit, von einem vorherigen oder nachgeschalteten Prozessschritt vorgegeben und ein weiterer der drei genannten Ströme auf einen Sollwert hingeregelt, beispielsweise einen konstanten Retentatstrom, ein konstantes Verhältnis Feed zu Retentat, etc. Dadurch ergibt sich aufgrund der äußeren Massenbilanz auch der dritte der drei genannten Ströme. Der Maßstab und damit die absoluten Massenströme sind anhand der Membranmodulgröße und -anzahl weitgehend beliebig einstellbar. In einer bevorzugten Ausführungsform beträgt das Verhältnis des Retentatmassenstroms zum Feedmassenstrom 1 bis 99%, vorzugsweise 10 bis 90% und besonders bevorzugt 15 bis 80%. In einer weiteren bevorzugten Ausführungsform beträgt das Verhältnis des Massenstroms des abgeführten Permeats zum Gesamtpermeatmassenstroms 1 bis 99%, vorzugsweise 30 bis 98%, besonders bevorzugt 60 bis 97%. Prozessschritt im Sinne der vorliegenden Erfindung ist eine Anlagen- oder Verfahrenseinheit, beispielsweise eine vor- oder nachgelagerte chemische Umsetzung, bei der das Permeat/Retentat eingesetzt wird, ein weiterer Trennschritt, beispielsweise eine thermische Trennung wie Dünnschichtverdampfung oder Destillation oder die Logistik, also insbesondere vor- oder nachgelagerte Tanklager oder eine Abfüllung. Vorgelagerte Prozessschritte sind insbesondere kontinuierlich durchgeführte Prozessschritte, über die kontinuierlich ein flüssiges Gemisch für das vorliegende Membrantrennverfahren bereitgestellt wird. Bevorzugt sind dies kontinuierliche durchgeführte chemische Umsetzungen, beispielsweise die im Folgenden noch genauer erläuterte Hydroformylierung oder Alkoxycarbonylierung.

Weiterhin liegt insbesondere auch eine ausgeglichene innere Massenbilanz (Massenstrom des Gesamtpermeats, also der Summe aller Permeatströme der Membranmodule, entspricht der Summe der Massenströme des zurückgeführten und des abgeführten Permeats) vor. Nach der vorliegenden Erfindung ist die innere Massenbilanz vorzugsweise weitgehend unabhängig von der äußeren Massenbilanz, d. h. die äußere Massenbilanz stellt grundsätzlich nur die Untergrenze für die innere Massenbilanz dar. Erfindungsgemäß bevorzugt ist deshalb, dass der Massenstrom des zurückgeführten Permeats schwanken kann und sich in Abhängigkeit, vorzugsweise in direkter Abhängigkeit, das heißt ohne einen zwischenliegenden Permeatbehälter, von dem Massenstrom des abgeführten Permeats einstellt. Das bedeutet auch, dass der Massenstrom des Gesamtpermeats abgesehen von technischen Limitierungen (durch Pumpen, Fließwiderstände, Membranfläche, etc.) unabhängig von der oben genannten äußeren Massenbilanz geregelt werden kann, solange der Massenstrom des Gesamtpermeats größer ist als der Massenstrom des abgeführten Permeats.

Der Massenstrom des Gesamtpermeats ist dabei von verschiedenen Parametern abhängig, zum Beispiel der Temperatur (der Membranmodule) oder der Konzentration der Komponenten im Gemisch. In einer bevorzugten Ausführungsform der vorliegenden Erfindung werden deshalb der Druck auf der Retentatseite und/oder der Druck auf der Permeatseite bzw. der daraus resultierende Transmembrandruck (TMP = Druckdifferenz zwischen Permeat- und Retentatseite) und optional die Membranmodultemperatur geregelt, um die Menge des Gesamtpermeatstroms zu optimieren respektive eine gewünschte Menge des Gesamtpermeatstroms zu erhalten.

Das erfindungsgemäße Membrantrennverfahren kann auf verschiedene Arten regelungstechnisch eingestellt werden, in Abhängigkeit von der jeweiligen Regelgröße, einem zur Beeinflussung der Regelgröße vorhandenen Aktuator und der Regelungspriorität. Für das vorliegende Verfahren gibt es verschiedene Regelgrößen, wie den Füllstand des Feedbehälters, den Druck auf der Retentatseite und auf der Permeatseite, aus deren Differenz sich der Transmembrandruck (TMP) ergibt, sowie die Massenströme von Retentat und Permeat, die durch verschiedenen Aktuatoren, beispielsweise die Fördereinrichtung oder einen oder mehrere einstellbare Fließwiderstände, beeinflusst werden können.

Das erfindungsgemäße Membrantrennverfahren wird in einer bevorzugten Ausführungsform regelungstechnisch so eingestellt, dass der Massenstrom des Retentats und der TMP konstant gehalten werden. Diese beiden Parameter weisen folglich die höchsten Regelungsprioritäten auf, wobei die genaue Reihenfolge der Regelungsprioritäten beliebig festgelegt werden kann, d. h. der Massenstrom des Retentats kann die höchste Regelungspriorität und der TMP die zweithöchste Regelungspriorität aufweisen oder umgekehrt.

Der Massenstrom des Feeds zum (ersten) Membranmodul kann beim erfindungsgemäßen Verfahren in einer dem Fachmann bekannten Weise eingestellt werden, beispielsweise über die verwendete Fördereinrichtung der (ersten) Membranstufe. Die genaue Ausführungsform zur Einstellung des Massenstroms des Feeds zur (ersten) Membranstufe ist variabel und hängt zumeist von technischen Randbedingungen ab wie z. B. der gewählten Pumpenart, der Fördermenge und dem Förderdruck. Eine Regelung des Feedmassenstroms könnte beispielsweise umgesetzt werden mit einer mittels Drehzahl direkt geregelten Pumpe, z. B. einer Zahnradpumpe, einer Kolbenpumpe, einer Kolbenmembranpumpe oder ggf. einer mehrstufigen Kreiselpumpe. Eine andere Möglichkeit zur Regelung des Feedmassenstroms kann darin bestehen eine Kreiselpumpe und einen einstellbaren Fließwiderstand, wie ein (Regel-)Ventil, zu verwenden. Eine weitere Möglichkeit wäre die Verwendung einer Pumpe, z. B. einer Zahnradpumpe, einer Kolbenpumpe, einer Kolbenmembranpumpe oder einer Kreiselpumpe, in Kombination mit einer einstellbaren Rückströmleitung, beispielsweise von der Druckseite zur Saugseite der Pumpe.

Der retentatseitige Druck (Retentatdruck) kann durch die Fördereinrichtung und/oder optional einen weiteren Aktuator, beispielsweise einen Vordruckregler, geregelt werden. Der Retentatdruck kann beim erfindungsgemäße Verfahren 1 bis 100 bar, vorzugsweise 10 bis 80 bar und besonders bevorzugt 30 bis 60 bar betragen. Der Retentatdruck ist dabei größer als der permeatseitige Druck (Permeatdruck). Der aus der Differenz von Retentatdruck und Permeatdruck gebildete Transmembrandruck kann beim erfindungsgemäßen Verfahren 1 bis 90 bar, vorzugsweise 10 bis 80, besonders bevorzugt 30 bis 60 bar betragen.

Der Permeatdruck kann dann 0 bis 50 bar, vorzugsweise 0 bis 10 bar und besonders bevorzugt 1 bis 5 bar betragen. Der Permeatdruck aller vorhandenen Membranmodule ist in einer bevorzugten Ausführungsform ähnlich (maximal 10% Abweichung voneinander) oder gleich, was weiterhin bevorzugt über einen permeatseitigen Vordruckregler eingestellt werden kann. Die Drücke der einzelnen Membranmodule werden vorzugsweise nämlich nicht unabhängig vom Gesamtdruck auf der Permeatseite, beispielsweise der gemeinsamen Rohrleitung, geregelt.

Die Membraneinheit bzw. die einzelnen Membranstufen umfassen vorzugsweise eine retentatseitige Druckregelung, die zumindest die Fördereinrichtung und einen Druckmesser umfasst, wobei der Retentatdruck in Abhängigkeit vom Druckmesser eingestellt werden kann. Dabei kann der Retentatdruck durch Einstellung beispielsweise des Fördervolumens der Fördereinrichtung und optional durch einen weiteren Aktuator, beispielsweise einem Vordruckregler, in Abhängigkeit des (durch den Druckmesser) gemessenen Rententatdrucks geregelt werden, wobei - bezogen auf einen vorher festgelegten Sollwert für den Retentatdruck - bei erhöhtem und/oder steigendem Retentatdruck das Fördervolumen der Fördereinrichtung verringert wird und bei verringertem und/oder sinkendem Retentatdruck das Fördervolumen der Fördereinrichtung erhöht wird.

Der Retentatdruck kann aber auch durch eine Kombination aus einem Druckmesser und einem einstellbaren Fließwiderstand, insbesondere einem Ventil auf der Retentatseite geregelt werden. Dabei kann der Retentatdruck beispielsweise durch die Ventilstellung in Abhängigkeit des gemessenen Rententatdrucks (durch den Druckmesser) geregelt werden, wobei - bezogen auf einen vorher festgelegten Sollwert für den Retentatdruck - bei erhöhtem und/oder steigendem Retentatdruck das Ventil weiter geöffnet und bei verringertem und/oder sinkendem Retentatdruck weiter geschlossen wird.

Der Massenstrom des Retentats (Retentatmassenstrom) wird beim erfindungsgemäßen Verfahren vorzugsweise über eine retentatseitige Massenstromregelung, die zumindest einen Massendurchflussmesser und einen einstellbaren Fließwiderstand, vorzugsweise ein Ventil, umfasst, geregelt. Der Retentatmassenstrom kann dabei durch Einstellung des Massendurchflussreglers in Abhängigkeit des gemessenen Retentatmassenstroms geregelt werden, wobei - bezogen auf einen vorher festgelegten Sollwert für den Retentatmassenstrom - bei erhöhtem und/oder steigendem Retentatmassenstrom das Ventil des Massendurchflussreglers weiter schließt und bei verringertem und/oder sinkendem Retentatmassenstrom das Ventil des Massendurchflussreglers weiter öffnet. Der Retentatdruck kann dann im Rahmen der minimal notwendigen und maximal möglichen Belastung der Membranstufe(n) frei gewählt werden.

Es ist gemäß einer anderen Ausführungsform aber auch möglich, dass der Retentatmassenstrom durch eine Kombination aus Massendurchflussmesser und der Fördereinrichtung geregelt wird. Der Retentatmassenstrom kann dabei beispielsweise durch Einstellung des Fördervolumens der Fördereinrichtung in Abhängigkeit des gemessenen Retentatmassenstroms geregelt werden, wobei - bezogen auf einen vorher festgelegten Sollwert für den Retentatmassenstrom - bei erhöhtem und/oder steigendem Retentatmassenstrom das Fördervolumen der Fördereinrichtung verringert wird und bei verringertem und/oder sinkendem Retentatmassenstrom das Fördervolumen der Fördereinrichtung erhöht wird.

Die Sensoren und Aktuatoren der retentatseitigen Massenstromregelung, die zumindest die Fördereinrichtung oder einen einstellbaren Fließwiderstand und einen Massendurchflussmesser umfasst, und der vorgenannten retentatseitigen Druckregelung, die zumindest die Fördereinrichtung oder einen einstellbaren Fließwiderstand und einen Druckmesser umfasst, können regelungstechnisch in beliebiger Weise miteinander verschaltet werden, um die beiden Regelgrößen Retentatmassenstrom und Retentatdruck zu regeln. Die Priorität der beiden Regelgrößen Retentatmassenstrom und Retentatdruck kann beim erfindungsgemäßen Verfahren untereinander beliebig gewählt werden. Vorzugsweise ist die Priorität der beiden Regelgrößen Retentatmassenstrom und Retentatdruck (bzw. dadurch der TMP) höher als die aller anderen Regelgrößen der Membrantrennstufe, weist also das schnellste Ansprechverhalten auf.

Der Massenstrom des abgeführten Permeats (der letzten Membranstufe) kann in direkter oder indirekter Abhängigkeit des Füllstands des Feedbehälters einer, vorzugsweise kontinuierlichen Regelung unterliegen, die sich dadurch auszeichnet, dass - bezogen auf einen vorher festgelegten Sollwert für den Füllstand des Feedbehälters, wobei der Sollwert vorzugsweise 20 bis 80%, besonders bevorzugt 30 bis 70 % des maximal möglichen Füllstands beträgt - bei steigendem Füllstand des Feedbehälters der Massenstrom des abgeführten Permeats erhöht und bei sinkendem Füllstand des Feedbehälters der Massenstrom des abgeführten Permeats verringert wird. Bei dieser Art der Regelung ist der Feedbehälter nicht vollständig gefüllt, da ansonsten der Füllstand an oder über dem oberen Rand seines Messbereichs liegt und somit unbekannt ist, wodurch keine Regelung auf einen Sollwert möglich ist. Die Einstellung des Massenstroms des abgeführten Permeats erfolgt insbesondere über mindestens einen einstellbaren Fließwiederstand. Im Falle einer kontinuierlichen Regelung wird der Füllstand des Feedbehälters dadurch vorzugsweise konstant gehalten. Das Regelungsprinzip nach dem Füllstand des Feedbehälters würde beispielsweise bewirken, dass bei Erreichen eines Tiefstands im Feedbehälter der Massenstrom des abgeführten Permeats immer weiter verringert wird und gegebenenfalls kein Permeat mehr abgeführt wird.

Die Temperaturen der drei Ströme Feed, Retentat und Permeat können in einem weiten Bereich variieren. Die Temperatur jedes der drei Ströme Feed, Retentat und Permeat beträgt unabhängig voneinander vorzugsweise -30 °C bis 150 °C, besonders bevorzugt 0 °C bis 100 °C und ganz besonders bevorzugt 20 °C bis 80 °C.

Zur Realisierung der vorgenannten regelungstechnischen Ausführungsarten des erfindungsgemäßen Verfahrens trägt auch der Aufbau der Membraneinheit bei, der im Folgenden genauer beschrieben werden soll.

Die Membraneinheit, die im erfindungsgemäßen Verfahren zur Abtrennung der Komponente aus dem Gemisch verwendet wird, umfasst mindestens eine Membranstufe. Die Membraneinheit kann aber auch mehrere Membranstufen umfassen, die seriell miteinander verbunden sind. In diesem Fall erfolgt die Aufteilung des Gesamtpermeatstroms nur in der letzten Membranstufe.

Eine Membranstufe der Membraneinheit des erfindungsgemäßen Verfahrens umfasst nach obiger Definition eine Fördereinrichtung. Die Fördereinrichtung, mit der das Gemisch als Feed zu dem mindestens zwei seriell verschalteten Membranmodulen geführt wird, ist vorzugsweise hinsichtlich ihres Fördervolumens einstellbar. Der Druck des Feeds zu den mindestens zwei Membranmodulen kann dabei 1 bis 100 bar, vorzugsweise 10 bis 80 bar und besonders bevorzugt 30 bis 60 bar betragen. Als Fördereinrichtung eignen sich beispielsweise dem Fachmann bekannte Pumpen, wie Kreiselpumpen, Kolbenpumpen, Kolbenmembranpumpen, Kreiskolbenpumpen oder Zahnradpumpen.

Eine Membranstufe der erfindungsgemäßen Membraneinheit umfasst weiterhin mindestens zwei seriell verschaltete Membranmodule. Die Anzahl der Membranmodule ist theoretisch nicht nach oben begrenzt, sondern hängt von den allgemeinen Prozessparametern und der gewünschten Membranfläche ab. In einer bevorzugten Ausführungsform umfasst die Membranstufe mehr als zwei Membranmodule, die weiterhin bevorzugt seriell miteinander verschaltet sind. Das zur Membraneinheit gelangte Gemisch wird zu (ersten) Membranstufe geführt, wo es mittels der Fördereinrichtung als Feed zu dem einen oder den mehreren Membranmodulen geführt wird. Innerhalb der Membranstufe erfolgt die Auftrennung in Permeat und Retentat, wobei aus jedem vorhandenen Membranmodul ein Permeatstrom entnommen wird.

Bei den hier vorliegenden mindestens zwei Membranmodulen wird demnach eine der Anzahl der Membranmodule entsprechende Anzahl an Permeatströmen erzeugt. Die Membranmodule sind dabei permeatseitig gegenläufig wir vorgenannt beschrieben an die gemeinsame Rohrleitung angeschlossen sind. Im Gegensatz dazu wird nur ein Retentatstrom erhalten, da das Retentat des ersten Membranmoduls zum nächsten Membranmodul geleitet wird, von dem Retentat ein weiteres Permeat abgetrennt wird und das Rententat des zweiten Membranmoduls dann zum nächsten Membranmodul geführt wird oder, sofern nur zwei Membranmodule vorliegen, aus der Membranstufe und/oder der Membraneinheit herausgeführt wird.

Eine Membranstufe nach dem erfindungsgemäßen Verfahren umfasst einen der Fördereinrichtung vorgeschalteten Feedbehälter, aus dem der Feed durch die Fördereinrichtung als Feed zu den mindestens zwei Membranmodulen geführt wird. Sofern nur eine Membranstufe vorliegt, können in den Feedbehälter sowohl der Feed zur Membranstufe als auch das zurückgeführte Permeat der Membranstufe eingeleitet und dort gesammelt werden, bevor sie mittels der Fördereinrichtung als Feed zu den mindestens zwei Membranmodulen geführt werden. Liegt mehr als eine Membranstufe vor, können im Feedbehälter der ersten Stufe der Feed zur ersten Membranstufe und ein Retentat einer der nachfolgenden Stufe gesammelt werden, während in den Feedbehälter der nachfolgenden Stufe(n) jeweils das Permeat der vorherigen Membranstufe und entweder das Retentat der nachfolgenden Stufe oder in der letzten Membranstufe das zurückgeführte Permeat gesammelt werden können. Der Aufbau und die Spezifikationen eines solchen Feedbehälters sind dem Fachmann bekannt. Der Feedbehälter umfasst vorzugsweise eine Messeinheit für den Füllstand. Möglich ist bei beiden Varianten auch dass die jeweiligen zurückgeführten Ströme nicht in den Feedbehälter, sondern hinter den Feedbehälter aber vor die Fördereinrichtung geführt werden.

Die Membranstufe kann weiterhin Sensoren und/oder Aktuatoren umfassen, um die vorgenannten, bevorzugten regeltechnischen Vorgaben erfüllen zu können. Dazu zählen insbesondere Mess- und/oder Regeleinheiten zu den Parametern wie Temperatur, Druck, Massenstrom o.ä. Entsprechende Mess- und Regeleinheiten sind dem Fachmann bekannt.

Ein Membranmodul nach der vorliegenden Erfindung, wovon mindestens zwei in der Membranstufe vorhanden sind, umfasst ein oder mehrere Membranelement(e). Grundsätzlich können Membranmodule wie erwähnt entweder als Membranloop oder als Membranrack ausgestaltet sein. Vorzugsweise handelt es sich bei den erfindungsgemäß in der oder den Membranstufe(n) vorhandenen Membranmodulen um Membranloops.

Ein Membranloop umfasst ein oder mehrere Membranelement(e) und mindestens eine Fördereinrichtung. Bevorzugt umfasst ein Membranloop nur eine Fördereinrichtung. Diese Fördereinrichtung ist nicht identisch mit der Fördereinrichtung der entsprechenden Membranstufe, sondern das gesamte System weist dann mindestens zwei Fördereinrichtungen auf. Die Fördereinrichtung des Membranloops ist im Regelfall für die Umwälzung des Membranloops zuständig, während die Fördereinrichtung der Membranstufe im Regelfall für die Bedrückung der Membranmodule bzw. des Membranloops zuständig ist. Als Fördereinrichtung kann jede geeignete Pumpe verwendet werden. Solche Pumpen sind dem Fachmann bekannt. Die innerhalb eines Membranloops als Fördereinrichtung eingesetzte Pumpe ist vorzugsweise eine Kreiselpumpe.

Durch die Fördereinrichtung wird ein bewegter Überströmkreislauf erzeugt. Durch den Überströmkreislauf kann idealerweise der Massentransport und somit die Trennleistung der Membran verbessert werden. Die Einstellung des Überströmkreislaufs kann dabei unabhängig vom übergreifendem Regelungskonzept und der äußeren sowie inneren Massenbilanz eingestellt werden.

Ein Membranloop kann weiterhin auch Mess- und/oder Regeleinheiten zu den Parametern wie Temperatur, Differenzdruck (axialer Druckverlust), Kreislaufmenge o.ä umfassen, beispielsweise eine Heizung oder Kühlung, um die Temperatur einzustellen. Weitere Mess- und Regeleinheiten sind dem Fachmann bekannt. In einer bevorzugten Ausführungsform ist der Druck aller vorhandenen Membranloops in einer Membranstufe ähnlich (Abweichung < 10%) oder identisch. Die Einstellung dieses zumindest ähnlichen Drucks kann sich ohne das Vorhandensein einer bestimmten Regeleinheit einstellen, kann aber auch mittels eines Druckreglers eingestellt werden. Der Druckregler für den Permeatdruck weist vorzugsweise das trägste Ansprechverhalten im Vergleich mit den anderen Aktuatoren, also der permeatseitigen Massenstromregelung, der retentatseitigen Massenstromregelung und der retentatseitigen Druckregelung auf.

Im Gegensatz zum vorherig beschriebenen Membranloop weist ein als Membranrack ausgestaltetes Membranmodul keine Fördereinrichtung auf, sondern ein oder mehrere Membranelemente und gegebenenfalls zusätzliche Mess- und Regeleinheiten auf.

Das oder die im Membranmodul, vorzugsweise im Membranloop, vorhandenen Membranelemente sind zur technischen Nutzung vorkonfektionierte Elemente, die die Membran enthalten und als die nicht weiter teilbare Grundeinheit des erfindungsgemäßen Membrantrennverfahren betrachtet werden können. Das oder die Membranelemente können als solche in dem Membranmodul eingesetzt werden oder in einem Druckgehäuse, beispielsweise einem Druckrohr angeordnet sein. Das einzeln betrachtete Druckrohr kann ein oder mehrere Membranelement(e) enthalten, vorzugsweise bis zu fünf Membranelemente. Sofern das oder die Membranelemente in einem Druckgehäuse, vorzugsweise einem Druckrohr angeordnet sind, kann ein Membranmodul mehrere Druckrohre umfassen. Die in einem Druckrohr angeordneten Membranelemente werden vorzugsweise feed- bzw. retentatseitig seriell durchströmt und sind permeatseitig verbunden. Als Membranelement einsetzbare Grundeinheiten können dem Fachmann bekannte Spiralwickelelemente eingesetzt werden. Ein oder mehrere Spiralwickelelemente können dann in einem Druckgehäuse, vorzugsweise einem Druckrohr vorhanden sein.

Als Membranen werden vorzugsweise solche eingesetzt, die eine trennaktive Schicht aus einem Material aufweisen, welches aus der Gruppe, bestehend aus Celluloseacetat, Cellulosetriacetat, Cellulosenitrat, regenerierter Cellulose, Polyimiden, Polyamiden, Polyetheretherketonen, sulfonierten Polyetheretherketonen, aromatischen Polyamiden, Polyamidimiden, Polybenzimidazolen, Polybenzimidazolone, Polyacrylnitril, Polyarylethersulfone, Polyester, Polycarbonaten, Polytetrafluorethylen, Polyvinylidenfluorid, Polypropylen, endständig oder seitenständig organomodifiziertem Siloxan, Polydimethylsiloxan, Silicone, Siliconacrylate, Polyphosphazene, Polyphenylsulfide, Polybenzimidazole, 6.6 Nylon^{®}, Polysulfone, Polyaniline, Polypropylene, Polyurethane, Acrylonitril/Glycidylmethacrylat (PANGMA), Polytrimethylsilylpropyne, Polymethylpentyne, Polyvinyltrimethylsilan, Polyphenylenoxid, alpha-Aluminiumoxide, gamma-Aluminiumoxide, Titanoxide, Siliciumoxide, Zirconiumoxide, mit Silanen hydrophobisierte keramische Membranen, wie sie in EP 1 603 663 B1 beschrieben sind, Polymere mit intrinsischer Mikroporosität (PIM) wie PIM-1 und anderen, wie sie z. B. in EP 0 781 166 B1 beschrieben werden, oder Mischungen daraus ausgewählt wird. Die oben genannten Stoffe können in der trennaktiven Schicht durch Zugabe von Hilfsstoffen vernetzt vorliegen oder als so genannte Mixed Matrix Membranen mit Füllstoffen wie z.B. Carbon Nano Tubes, Metal Organic Frameworks oder Hollow Spheres sowie Partikel von anorganischen Oxiden oder anorganische Fasern, wie z. B. Keramik- oder Glasfasern versehen sein.

Besonders bevorzugt werden Membranen eingesetzt, die als trennaktive Schicht eine Polymerschicht aus endständig oder seitenständig organomodifiziertem Siloxan, Polydimethylsiloxan, Siliconacrylaten oder Polyimid aufweisen, die aus Polymeren mit intrinsischer Mikroporosität (PIM) wie PIM-1 aufgebaut sind, oder wobei die trennaktive Schicht über eine hydrophobierte keramische Membran aufgebaut ist. Ganz besonders bevorzugt werden Membranen aus endständig oder seitenständig organomodifiziertem Siloxanen oder Polydimethylsiloxanen eingesetzt. Solche Membranen sind kommerziell erhältlich.

Neben den oben genannten Materialien können die Membranen weitere Materialien aufweisen. Insbesondere können die Membranen Stütz- oder Trägermaterialien aufweisen, auf die die trennaktive Schicht aufgebracht ist. Eine Auswahl von Stützmaterialien beschreibt EP 0 781 166, auf welches explizit verwiesen wird.

In einer besonders bevorzugten Ausführungsform wird das beschriebene Verfahren zur Membranabtrennung eines homogenen Katalysators genutzt. Die abzutrennende Komponente ist dann der homogene Katalysator und das flüssige Gemisch das aus einer Reaktionsstufe erhaltene Reaktionsgemisch.

Ein besonders bevorzugtes Verfahren gemäß der vorliegenden Erfindung ist deshalb ein Verfahren zur kontinuierlichen Abtrennung eines homogenen Katalysators aus einem flüssigen Reaktionsgemisch unter Verwendung einer Membraneinheit, die mindestens eine Membranstufe umfasst und mit dem aus einer Reaktionszone stammenden, den homogenen Katalysator enthaltenden Reaktionsgemisch als Feed gespeist wird, wobei eine Membranstufe zumindest aus einer Fördereinrichtung, mindestens zwei seriell verschalteten Membranmodulen und einem der Fördereinrichtung vorgeschalteten Feedbehälter besteht,
wobei das Verfahren die folgenden Schritte umfasst, bei denen
das Reaktionsgemisch aus dem Feedbehälter mittels der Fördereinrichtung als Feed zum ersten der mindestens zwei Membranmodule geführt wird, wodurch der homogene Katalysator, jeweils bezogen auf das zum ersten Membranmodul geführte Gemisch, im resultierenden Permeatstrom des ersten Membranmoduls abgereichert und im resultierenden Retentatstrom des ersten Membranmoduls angereichert wird,
das Retentat des ersten Membranmoduls zum zweiten Membranmodul geführt wird, wodurch der homogene Katalysator, jeweils bezogen auf das Retentat des ersten Membranmoduls, im resultierenden Permeatstrom des zweiten Membranmoduls abgereichert und im resultierenden Retentatstrom des zweiten Membranmoduls angereichert wird,
dadurch gekennzeichnet, dass
die mindestens zwei Membranmodule permeatseitig sequenziell so miteinander verknüpft sind, dass aus den mindestens zwei Permeatströmen ein Gesamtpermeatstrom entsteht, in dem keine vollständige Mischung der einzelnen Permeatströme stattfindet, und
ein Teil des Gesamtpermeatstroms, das zurückgeführte Permeat, zum Feedbehälter und/oder hinter den Feedbehälter aber vor die Fördereinrichtung zurückgeführt und der restliche Teil des Gesamtpermeatstroms, das abgeführte Permeat, aus der Membranstufe abgeführt wird, wobei das zurückgeführte Permeat eine höhere Konzentration des homogenen Katalysators aufweist als das abgeführte Permeat.

Das Reaktionsgemisch entstammt einem für das jeweilige Verfahren geeigneten Reaktionszone, vorzugsweise einem oder mehreren geeigneten Reaktoren. Der zumindest einen Großteil des homogenen Katalysators enthaltene Retentatstrom wird vorzugsweise zu der Reaktionszone, insbesondere dem oder den Reaktoren, zurückgeführt, ggf. nach vorheriger Aufreinigung und/oder Aufarbeitung des Katalysators. Da der Massenstrom aus der Reaktionszone produktionsbedingt schwanken kann, können die vorherig beschriebenen regelungs- und anlagentechnischen Vorgaben auch bei der Abtrennung des homogenen Katalysators angewendet werden.

In der Reaktionszone, vorzugsweise dem oder den Reaktoren, wird demnach eine homogen katalysierte Reaktion durchgeführt. Dabei kann es sich um folgende Reaktionen handeln: Oxidationen, Epoxidierungen, Hydroformylierungen, Hydroaminierungen, Hydroaminomethylierungen, Hydrocyanierungen, Hydrocarboxylierungen, Hydroxycarbonylierungen, Hydrocarboxyalkylierungen, Alkoxycarbonylieruneng, Aminierungen, Ammonoxidation, Oximierungen, Hydrosilylierungen, Ethoxylierungen, Propoxylierungen, Carbonylierungen, Telomerisierungen, Methathesen, Suzuki-Kupplungen und Hydrierungen.

Vorzugsweise handelt es sich um eine Hydroformylierung. Die Hydroformylierung ist insbesondere eine Hydroformylierung von Olefinen mit 3 bis 15 Kohlenstoffatomen, vorzugsweise 8 bis 12 Kohlenstoffatomen. Die Hydroformylierung ist vorzugsweise eine homogen katalysierte Hydroformylierung, bei der das Katalysatorsystem (vollständig) gelöst in der flüssigen Phase des Reaktionsgemisches vorliegt. Das Katalysatorsystem der Hydroformylierung umfasst vorzugsweise ein Übergangsmetall aus der 8. oder 9. Gruppe des Periodensystems der Elemente (PSE) und mindestens einen organischen Phosphor-haltigen Liganden. Geeignete Phosphor-haltige Liganden sind dem Fachmann bekannt, vorzugsweise handelt es ich aber um monodentate Phosphor-haltige Liganden, beispielsweise Tris(2,4-di-tert-butylphenyl)phosphit.

Als Übergangsmetall können insbesondere Eisen, Ruthenium, Iridium, Cobalt oder Rhodium, vorzugsweise Cobalt oder Rhodium, besonders bevorzugt Rhodium eingesetzt werden. Als katalytische aktive Spezies werden üblicherweise (Liganden)-Carbonyl-Komplexe der Metallatome diskutiert, die sich unter erhöhtem Druck und erhöhter Temperatur im flüssigen Reaktionsgemisch bilden.

Die Hydroformylierung kann in Anwesenheit eines Lösemittels durchgeführt werden, wobei das Lösemittel mit dem Hydroformylierungsverfahren kompatibel sein sollte. Als Lösemittel können geeignete dem Fachmann bekannten Lösemittel für die Hydroformylierung verwendet werden, beispielsweise Alkane, aromatische Kohlenwasserstoffe, Wasser, Ether, Ester, Ketone, Alkohole und die Reaktions- oder Nebenprodukte der Hydroformylierung wie Aldehyde und Kondensationsprodukte der Aldehyde.

Weiterhin kann die Hydroformylierung bei einem Druck von 10 bis 400 bar, vorzugsweise 15 bis 270 bar durchgeführt werden. Die Temperatur bei der Hydroformylierung kann 70 bis 250 °C, vorzugsweise 100 bis 200 °C, besonders bevorzugt 120 bis 160 °C betragen.

Die vorliegende Erfindung wird anhand der nachfolgenden Abbildungen, in denen bestimmte Ausführungsformen gezeigt sind, beschrieben. Die Abbildungen stellen nur eine Veranschaulichung dar und sind nicht einschränkend zu verstehen.

Fig. 1 zeigt einen exemplarischen Aufbau einer Membraneinheit, die eine Membranstufe mit zwei Membranmodulen umfasst. Die Membranstufe besteht aus einem Feedbehälter (B-2), einer Pumpe (P-2) und zwei Membranmodulen (M-2 / M-3). Der Feedbehälter (B-2) wird dabei mit dem flüssigen Gemisch als Feed zur Membranstufe (F-4) gespeist. Aus dem Feedbehälter (B-2) wird das flüssige Gemisch durch die Pumpe (P-2) als Feed (F-5) zum ersten Membranmodul (M-2), beispielsweise einem Membranloop, geführt, wo die in diesem Fall erste Membrantrennung stattfindet. Aus dem Membranmodul (M-2) werden dann das Retentat des ersten Membranmoduls (F-6) und das Permeat des ersten Membranmoduls (F-8) entnommen. Das Retentat (F-6) wird zum zweiten Membranmodul (M-3) geleitet, wo eine weitere Membrantrennung stattfindet, wodurch das Permeat (F-9) und das Retentat (F-7) des zweiten bzw. des letzten Membranmoduls (M-3) entstehen. Das Retentat (F-7) wird über das Ausgangsventil (V-2) entnommen. Die beiden Permeate (F-8 / F-9) der beiden Membranmodule (M-2 / M-3) werden zu einer gemeinsamen Rohrleitung (F-10) geführt. Die beiden Permeate (F-8 / F-9) ergeben im Sinne der vorliegenden Erfindung das Gesamtpermeat (gestricheltes Rechteckt), was zumindest als Rechengröße auch ohne vollständige Mischung existiert. Aus der gemeinsamen Rohrleitung (F-10) werden zwei Permeatströme entnommen, das zurückgeführte Permeat (F-11) und das abgeführte Permeat (F-12). Das abgeführte Permeat (F-12) wird über das Ausgangsventil (V-4) abgeführt und das zurückgeführte Permeat (F-11) über das Rückführungsventil (V-3) zum Feedbehälter (B-2). Denkbar wäre auch, dass das zurückgeführte Permeat (F-11) nicht in den Feedbehälter (B-2) sondern zwischen Feedbehälter (B-2) und Pumpe (P-2) eingespeist wird (nicht eingezeichnet).

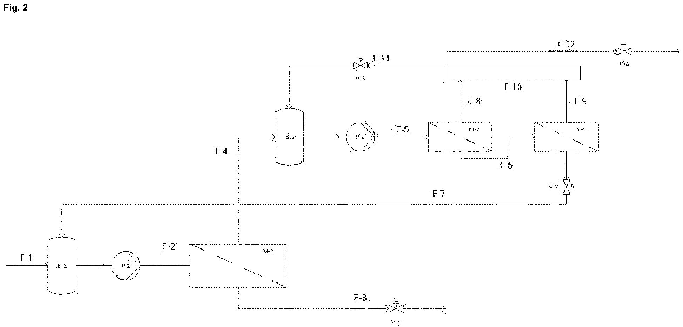

Fig. 2 zeigt einen exemplarischen Aufbau einer Membraneinheit, welche zwei Membranstufen umfasst. Die Membranstufen bestehen dabei jeweils aus einem Feedbehälter (B-1 / B-2), jeweils einer Pumpe (P-1 / P-2) und einem oder zwei Membranmodulen (M-1 / M-2 / M-3). Der Feedbehälter (B-1) wird dabei mit dem flüssigen Gemisch als Feed zur Membranstufe (F-1) gespeist. Aus dem Feedbehälter (B-1) wird das flüssige Gemisch durch die Pumpe (P-1) als Feed (F-2) zum Membranmodul (M-1), beispielsweise einem Membranloop, geführt, wo die Membrantrennung stattfindet. Aus dem Membranmodul (M-1) werden das Permeat (F-4) der ersten Membranstufe und das Retentat (F-3) über das Ausgangsventil (V-1) entnommen. Das Permeat (F-4) des ersten Membranmoduls (M-1) wird zum Feedbehälter (B-2) der zweiten Membranstufe geleitet und von dort mittels einer Pumpe (P-2) als Feed (F-5) zum ersten Membranmodul (M-2) der zweiten Membranstufe, beispielsweise einem Membranloop, geführt, wo eine Membrantrennung stattfindet. Aus dem Membranmodul (M-2) werden dann das Retentat des ersten Membranmoduls (F-6) und das Permeat des ersten Membranmoduls (F-8) entnommen. Das Retentat (F-6) wird zum zweiten bzw. zum letzten Membranmodul (M-3) der zweiten Membranstufe geleitet, wo eine weitere Membrantrennung stattfindet, wodurch das Permeat (F-9) und das Retentat (F-7) des zweiten Membranmoduls (M-3) entstehen. Das Retentat (F-7) nachfolgend über das Ausgangsventil (V-2) zum Feedbehälter (B-1) der ersten Membranstufe geführt. Die beiden Permeate (F-8 / F-9) der beiden Membranmodule (M-2 / M-3) werden zu einer gemeinsamen Rohrleitung (F-10) geführt. Aus der gemeinsamen Rohrleitung werden zwei Permeatströme entnommen, das zurückgeführte Permeat (F-11) und das abgeführte Permeat (F-12). Das abgeführte Permeat (F-12) wird über das Ausgangsventil (V-4) abgeführt und das zurückgeführte

Permeat (F-11) über das Rückführungsventil (V-3) zum Feedbehälter (B-2). Denkbar wäre auch, dass das zurückgeführte Permeat (F-11) nicht in den Feedbehälter (B-2) sondern zwischen Feedbehälter (B-2) und Pumpe (P-2) eingespeist wird (nicht eingezeichnet).

## Patentansprüche

1. Verfahren zur kontinuierlichen Abtrennung einer Komponente aus einem flüssigen Gemisch unter Verwendung einer Membraneinheit, die mindestens eine Membranstufe umfasst und mit dem Gemisch als Feed (F-4) gespeist wird, wobei eine Membranstufe zumindest aus einer Fördereinrichtung (P-2), mindestens zwei seriell verschalteten Membranmodulen (M-2, M-3) und einem der Fördereinrichtung (P-2) vorgeschalteten Feedbehälter (B-2) besteht,
wobei das Verfahren die folgenden Schritte umfasst, bei denen
das Gemisch aus dem Feedbehälter (B-2) mittels der Fördereinrichtung (P-2) als Feed (F-5) zum ersten der mindestens zwei Membranmodule (M-2, M-3) geführt wird, wodurch die abzutrennende Komponente, jeweils bezogen auf das zum ersten Membranmodul (M-2) geführte Gemisch, im resultierenden Permeatstrom (F-8) des ersten Membranmoduls (M-2) abgereichert und im resultierenden Retentatstrom (F-6) des ersten Membranmoduls (M-2) angereichert wird,
das Retentat (F-6) des ersten Membranmoduls (M-2) zum zweiten Membranmodul (M-3) geführt wird, wodurch die abzutrennende Komponente, jeweils bezogen auf das Retentat (F-6) des ersten Membranmoduls (M-2), im resultierenden Permeatstrom (F-9) des zweiten Membranmoduls (M-3) abgereichert und im resultierenden Retentatstrom (F-7) des zweiten Membranmoduls (M-3) angereichert wird,
**dadurch gekennzeichnet, dass**
die mindestens zwei Membranmodule (M-2, M-3) permeatseitig darüber miteinander verknüpft sind, dass die mindestens zwei Permeatströme (F-8, F-9) jeweils zu einer gemeinsamen Rohrleitung (F-10) geführt werden, wodurch in der Rohrleitung (F-10) ein Gesamtpermeatstrom entsteht, und
dass die mindestens zwei Membranmodule (M-2, M-3) permeatseitig gegenläufig so an die gemeinsame Rohrleitung (F-10) angeschlossen sind, dass der Teil des Gesamtpermeatstroms, das zurückgeführte Permeat (F-11), zumindest teilweise zum Feedbehälter (B-2) und/oder hinter den Feedbehälter (B-2) aber vor die Fördereinrichtung (P-2) zurückgeführt wird, während der restliche Teil des Gesamtpermeatstroms, das abgeführte Permeat (F-12), zumindest teilweise aus der Membranstufe herausgeführt wird, wobei das zurückgeführte Permeat (F-11) eine höhere Konzentration der abzutrennenden Komponente aufweist als das abgeführte Permeat (F-12).

2. Verfahren nach Anspruch 1, wobei die Konzentration im der abzutrennenden Komponente im zurückgeführten Permeat (F-11) größer ist als in der gemeinsamen Rohrleitung (F-10) zwischen den Anschlüssen des ersten (M-2) und des letzten Membranmoduls (M-3), und wobei die Konzentration der abzutrennenden Komponente in der gemeinsamen Rohrleitung (F-10) größer ist als im abgeführten Permeat (F-12).

3. Verfahren nach Anspruch 1 oder 2, wobei sich in der gemeinsamen Rohrleitung (F-10) zwischen den Anschlüssen des ersten (M-2) und des letzten Membranmoduls (M-3) an die Rohrleitung (F-10) keine regelnden Aktuatoren befinden.

4. Verfahren nach einem der vorhergehenden Ansprüche, wobei das Zurückführen des zurückgeführten Permeats (F-11) zum Feedbehälter (B-2) und/oder hinter den Feedbehälter (B-2) aber vor die Fördereinrichtung (P-2) nicht mittels einer Fördereinrichtung, sondern hydraulisch erfolgt.

5. Verfahren nach einem der vorhergehenden Ansprüche, wobei der Massenstrom des zurückgeführten Permeats (F-11) schwanken kann und sich in Abhängigkeit von dem Massenstrom des abgeführten Permeats (F-12) einstellt.

6. Verfahren nach einem der vorhergehenden Ansprüche, wobei sowohl der Massenstrom des abgeführten Permeats (F-12) als auch der Permeatdruck jeweils mittels eines einstellbaren Fließwiderstandes eingestellt werden.

7. Verfahren nach einem der vorhergehenden Ansprüche, wobei der Massenstrom des abgeführten Permeats (F-12) in direkter oder indirekter Abhängigkeit des Füllstands des Feedbehälters (B-2) einer, vorzugsweise kontinuierlichen Regelung unterliegt, die sich dadurch auszeichnet, dass - bezogen auf einen vorher festgelegten Sollwert für den Füllstand des Feedbehälters (B-2) - bei steigendem Füllstand des Feedbehälters (B-2) der Massenstrom des abgeführten Permeats (F-12) erhöht und bei sinkendem Füllstand des Feedbehälters (B-2) der Massenstrom des abgeführten Permeats (F-12) verringert wird.

8. Verfahren nach einem der vorhergehenden Ansprüche, wobei der retentatseitige Druck (Retentatdruck) durch die Fördereinrichtung (P-2), mit der der Feed (F-5) zu den mindestens zwei seriell verschalteten Membranmodulen geführt wird, und optional einen weiteren Aktuator, beispielsweise einen Vordruckregler, oder durch eine Kombination aus einem Druckmesser und einem einstellbaren Fließwiderstand, insbesondere einem Ventil auf der Retentatseite, geregelt wird.

9. Verfahren nach einem der vorhergehenden Ansprüche, wobei der retentatseitige Massenstrom (Retentatmassenstrom) über eine retentatseitige Massenstromregelung, die zumindest einen Massendurchflussmesser und einen einstellbaren Fließwiderstand, vorzugsweise ein Ventil, umfasst, oder durch eine Kombination aus Massendurchflussmesser und der Fördereinrichtung geregelt wird.

10. Verfahren nach einem der vorhergehenden Ansprüche, wobei die Komponente ein homogener Katalysator ist, der aus einem Reaktionsgemisch abgetrennt wird.

11. Verfahren nach einem der vorhergehenden Ansprüche, wobei die Fördereinrichtung (P-2) eine Pumpe ist.

## Claims

1. Method of continuously separating a component from a liquid mixture using a membrane unit which comprises at least one membrane stage and is fed with the mixture as feed (F-4), wherein a membrane stage consists at least of a conveying device (P-2), at least two series-connected membrane modules (M-2, M-3), and a feed vessel (B-2) upstream of the conveying device (P-2),
wherein the method comprises the following steps in which the mixture from the feed vessel (B-2) is guided by means of the conveying device (P-2) as feed (F-5) to the first of the at least two membrane modules (M-2, M-3), which depletes the component to be separated off, based in each case on the mixture guided to the first membrane module (M-2), in the resulting permeate stream (F-8) from the first membrane module (M-2) and enriches it in the resulting retentate stream (F-6) from the first membrane module (M-2),
the retentate (F-6) from the first membrane module (M-2) is guided to the second membrane module (M-3), which depletes the component to be separated off, based in each case on the retentate (F-6) from the first membrane module (M-2), in the resulting permeate stream (F-9) from the second membrane module (M-3) and enriches it in the resulting retentate stream (F-7) from the second membrane module (M-3),
**characterized in that**
the at least two membrane modules (M-2, M-3) are joined sequentially to one another on the permeate side by such means that the at least two permeate streams (F-8, F-9) are each guided to a common pipeline (F-10), which gives rise to an overall permeate stream in the pipeline (F-10), and
**in that** the at least two membrane modules (M-2, M-3) are connected to the common pipeline (F-10) on the permeate side in opposite directions such that the portion of the overall permeate stream, the recycled permeate (F-11), is recycled at least partly to the feed vessel (B-2) and/or beyond the feed vessel (B-2) but upstream of the conveying device (P-2), while the remainder of the overall permeate stream, the removed permeate (F-12), is at least partly guided out of the membrane stage, with the recycled permeate (F-11) having a higher concentration of the component to be separated off than the removed permeate (F-12).

2. Method according to Claim 1, wherein the concentration of the component to be separated off in the recycled permeate (F-11) is greater than in the common pipeline (F-10) between the connections of the first (M-2) and last (M-3) membrane modules, and wherein the concentration of the component to be separated off in the common pipeline (F-10) is greater than in the removed permeate (F-12).

3. Method according to Claim 1 or 2, wherein there are no controlling actuators in the common pipeline (F-10) between the connections of the first (M-2) and last (M-3) membrane modules to the pipeline (F-10).

4. Method according to any of the preceding claims, wherein the recycling of the recycled permeate (F-11) to the feed vessel (B-2) and/or beyond the feed vessel (B-2) but upstream of the conveying device (P-2) is not by means of a conveying device but by hydraulic means.

5. Method according to any of the preceding claims, wherein the mass flow rate of the recycled permeate (F-11) can fluctuate and is established depending on the mass flow rate of the removed permeate (F-12).

6. Method according to any of the preceding claims, wherein both the mass flow rate of the removed permeate (F-12) and the permeate pressure are established by means of an adjustable flow resistor.

7. Method according to any of the preceding claims, wherein the mass flow rate of the removed permeate (F-12), depending directly or indirectly on the fill level of the feed vessel (B-2), is subject to preferably continuous closed-loop control, a feature of which is that - based on a target value fixed beforehand for the fill level of the feed vessel (B-2) - the mass flow rate of the removed permeate (F-12) increases with rising fill level of the feed vessel (B-2) and the mass flow rate of the removed permeate (F-12) decreases with falling fill level of the feed vessel (B-2).

8. Method according to any of the preceding claims, wherein the pressure on the retentate side (retentate pressure) is controlled by means of the conveying device (P-2) with which the feed (F-5) is fed to the at least two series-connected membrane modules, and optionally a further actuator, for example a supply pressure regulator, or by means of a combination of a manometer and an adjustable flow resistor, especially a valve on the retentate side.

9. Method according to any of the preceding claims, wherein the mass flow rate on the retentate side (retentate mass flow rate) is controlled by means of a closed-loop mass flow control system on the retentate side, comprising at least a mass flow meter and an adjustable flow resistor, preferably a valve, or by means of a combination of mass flow meter and the conveying device.

10. Method according to any of the preceding claims, wherein the component is a homogeneous catalyst which is separated from a reaction mixture.

11. Method according to any of the preceding claims, wherein the conveying device (P-2) is a pump.

## Revendications

1. Procédé de séparation continue d'un composant d'un mélange liquide à l'aide d'une unité membranaire qui comprend au moins un étage membranaire et est alimentée avec le mélange en tant qu'alimentation (F-4), dans lequel un étage membranaire est constitué au moins d'un dispositif de refoulement (P-2), d'au moins deux modules membranaires (M-2, M-3) raccordés en série et d'un réservoir d'alimentation (B-2) disposé en amont du dispositif de refoulement (P-2),
dans lequel le procédé comprend les étapes suivantes, dans lesquelles
le mélange provenant du réservoir d'alimentation (B-2) est acheminé au moyen du dispositif de refoulement (P-2), en tant qu'alimentation (F-5), vers le premier des au moins deux modules membranaires (M-2, M-3), ce qui entraîne un appauvrissement en composant à séparer du flux de perméat résultant (F-8) du premier module membranaire (M-2) et un enrichissement en composant à séparer du flux de rétentat résultant (F-6) du premier module membranaire (M-2), dans chaque cas par rapport au mélange acheminé vers le premier module membranaire (M-2),
le rétentat (F-6) du premier module membranaire (M-2) est acheminé vers le deuxième module membranaire (M-3), ce qui entraîne un appauvrissement en composant à séparer du flux de perméat résultant (F-9) du deuxième module membranaire (M-3) et un enrichissement en composant à séparer du flux de rétentat résultant (F-7) du deuxième module membranaire (M-3), dans chaque cas par rapport au rétentat (F-6) du premier module membranaire (M-2), **caractérisé en ce que**
les au moins deux modules membranaires (M-2, M-3) sont reliés entre eux du côté du perméat par le fait que les au moins deux flux de perméat (F-8, F-9) sont chacun acheminés vers une conduite commune (F-10), ce qui crée dans la conduite (F-10) un flux total de perméat, et
**en ce que** les au moins deux modules membranaires (M-2, M-3) sont raccordés du côté du perméat en sens opposés à la conduite commune (F-10) de telle sorte que la partie du flux total de perméat, à savoir le perméat recyclé (F-11), est au moins partiellement recyclée vers le réservoir d'alimentation (B-2) et/ou en aval du réservoir d'alimentation (B-2), mais en amont du dispositif de refoulement (P-2), tandis que la partie restante du flux total de perméat, à savoir le perméat évacué (F-12), est au moins partiellement évacuée de l'étage membranaire, dans lequel le perméat recyclé (F-11) présente une concentration du composant à séparer supérieure à celle du perméat évacué (F-12).

2. Procédé selon la revendication 1, dans lequel la concentration du composant à séparer dans le perméat recyclé (F-11) est supérieure à celle dans la conduite commune (F-10) entre les raccordements du premier module membranaire (M-2) et du dernier module membranaire (M-3), et dans lequel la concentration du composant à séparer dans la conduite commune (F-10) est supérieure à celle dans le perméat évacué (F-12).

3. Procédé selon la revendication 1 ou 2, dans lequel aucun actionneur de régulation ne se trouve dans la conduite commune (F-10) entre les raccordements du premier module membranaire (M-2) et du dernier module membranaire (M-3) à la conduite (F-10).

4. Procédé selon l'une des revendications précédentes, dans lequel le recyclage du perméat recyclé (F-11) vers le réservoir d'alimentation (B-2) et/ou en aval du réservoir d'alimentation (B-2), mais en amont du dispositif de refoulement (P-2), s'effectue non pas au moyen d'un dispositif de refoulement, mais hydrauliquement.

5. Procédé selon l'une des revendications précédentes, dans lequel le débit massique du perméat recyclé (F-11) peut fluctuer et s'établit en fonction du débit massique du perméat évacué (F-12).

6. Procédé selon l'une des revendications précédentes, dans lequel le débit massique du perméat évacué (F-12) ainsi que la pression du perméat sont chacun réglés au moyen d'une résistance à l'écoulement réglable.

7. Procédé selon l'une des revendications précédentes, dans lequel le débit massique du perméat évacué (F-12) est soumis, en fonction directe ou indirecte du niveau de remplissage du réservoir d'alimentation (B-2), à une régulation, de préférence continue, qui se **caractérise en ce que**, par rapport à une valeur de consigne préalablement fixée pour le niveau de remplissage du réservoir d'alimentation (B-2), le débit massique du perméat évacué (F-12) est augmenté lorsque le niveau de remplissage du réservoir d'alimentation (B-2) augmente et le débit massique du perméat évacué (F-12) est réduit lorsque le niveau de remplissage du réservoir d'alimentation (B-2) diminue.

8. Procédé selon l'une des revendications précédentes, dans lequel la pression du côté du rétentat (pression du rétentat) est régulée par le dispositif de refoulement (P-2), au moyen duquel l'alimentation (F-5) est acheminée vers les au moins deux modules membranaires raccordés en série, et éventuellement un autre actionneur, par exemple un régulateur de pression amont, ou par une combinaison d'un manomètre et d'une résistance à l'écoulement réglable, en particulier une soupape du côté du rétentat.

9. Procédé selon l'une des revendications précédentes, dans lequel le débit massique du côté du rétentat (débit massique du rétentat) est régulé au moyen d'une régulation du débit massique du côté du rétentat, qui comprend au moins un débitmètre massique et une résistance à l'écoulement réglable, de préférence une soupape, ou par une combinaison d'un débitmètre massique et du dispositif de refoulement.

10. Procédé selon l'une quelconque des revendications précédentes, dans lequel le composant est un catalyseur homogène séparé à partir d'un mélange réactionnel.

11. Procédé selon l'une des revendications précédentes, dans lequel le dispositif de refoulement (P-2) est une pompe.
